# EUROPÄISCHE PATENTSCHRIFT

(11) **EP 1 980 874 B1**
(45) Veröffentlichungstag und Bekanntmachung des Hinweises auf die Patenterteilung: **15.12.2010**
(21) Anmeldenummer: 08102215.4
(22) Anmeldetag: 03.03.2008
(51) Int. Cl.: G01S 13/93

(54) **Verfahren zur Feststellung von Verlusten an einer durchstrahlten Oberfläche eines Radarsensors, Radarsensor und Fahrerassistenzsystem mit einem solchen Radarsensor**
Method for determining losses in a transilluminated surface of a radar sensor, radar sensor and driver assistance system with such a radar sensor
Procédé de détection de pertes sur une surface irradiée d'un capteur radar, capteur radar et système d'assistance du conducteur doté d'un tel capteur radar

(30) Priorität: 10.04.2007 DE 102007016869
(43) Veröffentlichungstag der Anmeldung: 15.10.2008
(73) Patentinhaber: ROBERT BOSCH GMBH, 70442 Stuttgart (DE)
(72) Erfinder: Hilsebecher, Joerg, 31135, Hildesheim (DE); Arage Hassen, Alebel, 71229, Leonberg (DE); Hauk, Joachim, 71272, Renningen-Malmsheim (DE)

(56) Entgegenhaltungen:
- US-A- 5 043 703
- US-A1- 2007 040 727
- SHIMOZAWA M ET AL: "AN EVEN HARMONIC MIXER USING SELF-BIASED ANTI-PARALLEL DIODE PAIR" 2002 IEEE MTT-S INTERNATIONAL MICROWAVE SYMPOSIUM DIGEST (CAT. NO.02CH37278) IEEE PISCATAWAY, NJ, USA; [IEEE MTT-S INTERNATIONAL MICROWAVE SYMPOSIUM],, 2. Juni 2002 (2002-06-02), Seiten 253-256, XP001099484 ISBN: 978-0-7803-7239-9

## Beschreibung

### Stand der Technik

Die Erfindung betrifft einen Radarsensor, ein Verfahren zur Feststellung von Verlusten an einer durchstrahlten Oberfläche eines solchen Radarsensors sowie ein Fahrerassistenzsystem mit einem solchen Radarsensor.

Bei Radarsensoren, insbesondere bei langreichweitigen Radarsensoren (LRR; Long Range Radar), wie sie beispielsweise in Kraftfahrzeugen zur Ortung von vorausfahrenden Fahrzeugen eingesetzt werden, wird häufig als Ausgangssignal ein Zwischenfrequenzsignal gebildet, dessen Frequenz dem Frequenzunterschied zwischen dem gesendeten Signal und dem empfangenen Signal entspricht. Dieser Frequenzunterschied ist, beispielsweise bei einem FMCW-Radar (Frequency Modulated Continuous Wave) von der Signallaufzeit und von einer durch den Dopplereffekt bedingten Frequenzverschiebung abhängig, so daß sich der Abstand und die Relativgeschwindigkeit eines georteten Objekts berechnen lassen. Das Zwischenfrequenzsignal läßt sich dadurch erzeugen, daß das von der Radarantenne empfangene Signal in einen Mischer mit einem Signal gemischt wird, dessen Frequenz mit der Sendefrequenz übereinstimmt. Das Mischprodukt enthält dann eine Frequenzkomponente, die das gesuchte Zwischenfrequenzsignal bildet. Wenn das Signal, das mit dem empfangenen Signal gemischt wird, von einem speziellen Oszillator erzeugt wird, spricht man Heterodynmischung. Bei einem Radarsensor mit Homodynmischung wird dagegen das empfangene Signal unmittelbar mit einem Anteil des Signals gemischt, das der Sendeantenne oder Sende- und Empfangsantenne zugeführt wird.

Die Antenne des Radarsensors ist üblicherweise nicht unmittelbar der Umgebung und damit den Witterungseinflüssen ausgesetzt, sondern liegt geschützt hinter einer Radarlinse oder einer schützenden Gehäusewand, dem sogenannten Radom (Radar Dome), so daß die gesendete und empfangene Radarstrahlung die Linse bzw. das Radom durchdringen muß. Wenn sich auf der Oberfläche des Radoms oder der Linse verlustbehaftete dielektrische Schichten befinden, beispielsweise ein Wasser- oder Schmutzfilm, eine Schicht aus Schneematsch, Schnee oder Eis, so wird dadurch das Strahlungsfeld ungünstig beeinflußt, und es treten Absorptions- und Reflektionsverluste auf, die das Signal/RauschVerhältnis des Radarsensors herabsetzen und im Extremfall zu einer Erblindung des Radarsensors führen können.

Wenn ein solcher Radarsensor in einem Fahrerassistenzsystem eines Kraftfahrzeugs eingesetzt wird, beispielsweise in einem sogenannten ACC-System (Adaptive Cruise Control) zur automatischen Regelung des Abstands zu einem vorausfahrenden Fahrzeug oder in einem PSS-System (Predictive Safty System) zur Erkennung einer unmittelbar bevorstehenden Kollision, so ist es aus Gründen der Verkehrssicherheit wichtig, daß eine solche Erblindung oder Funktionsbeeinträchtigung des Radarsensors rechtzeitig und sicher erkannt werden kann, damit der Fahrer auf die damit verbundene Einschränkung der Funktionalität hingewiesen werden kann. Wenn kein redundantes zweites Ortungssystem zur Verfügung steht, läßt sich die Erblindung des Radarsensors bisher zumeist nur indirekt aus dem Ausbleiben von Ortungssignalen erschließen.

Aus US 2007/040727 A1 ist ein FMCW-Radar für Kraftfahrzeuge bekannt, das in der Lage ist, eine Verschmutzung des Radoms automatisch zu erkennen. Zu diesem Zweck wird in dem digitalisierten Mischprodukt das Abstandsfenster untersucht, das dem kleinsten Objektabstand entspricht.

### Offenbarung der Erfindung

Aufgabe der Erfindung ist es, ein Verfahren und einen Radarsensor sowie ein Fahrerassistenzsystem anzugeben, die eine einfache und zuverlässige Feststellung von Verlusten an der durchstrahlten Oberfläche des Radoms oder der Radarlinse ermöglichen.

Diese Aufgabe wird erfindungsgemäß mit den in den unabhängigen Patentansprüchen angegebenen Merkmalen gelöst.

Der Mischer des Radarsensors wird durch ein nichtlineares Element, beispielsweise durch eine nichtlineare Diode gebildet und weist einen bestimmten Arbeitspunkt auf, der durch den permanenten Spannungsabfall am Halbleiterübergang der Diode bzw. durch den entsprechenden Stromfluß durch die Diode gegeben ist. Die Erfindung nutzt die Tatsache aus, daß dieser Arbeitspunkt bei einem Homodynmischer und auch bei einem Heterodynmischer durch die an der dielektrischen Schicht auf dem Radom bzw. der Linse auftretenden Reflexionen beeinflußt wird. Das Vorhandensein eines Wasserfilms oder einer sonstigen dielektrischen Schicht auf der Oberfläche des Radoms bzw. der

Linse führt deshalb dazu, daß sich der Arbeitspunkt gegenüber dem Normalwert verschiebt. Erfindungsgemäß wird diese Verschiebung des Arbeitspunktes detektiert, um daraus auf eine Funktionsbeeinträchtigung oder Erblindung des Radarsensors zu schließen.

Vorteilhafte Ausgestaltungen und Weiterbildungen der Erfindung sind in den abhängigen Ansprüchen angegeben.

Wenn die Mischerdiode des Radarsensors eine sogenannte self-bias Diode ist, so stellt sich der Arbeitspunkt beim Betrieb des Radarsensors aufgrund der Eigenschaften der Diode von selbst ein. In diesem Fall kann die durch Reflexionen an der Oberfläche des Radoms oder der Linse bedingte Verschiebung des Arbeitspunktes direkt am Diodenausgang gemessen und ausgewertet werden.
Bei einigen Radarsensoren ist es jedoch notwendig oder wünschenswert, den Arbeitspunkt gezielt vorzugeben, indem eine konstante Vorspannung an die Mischerdiode angelegt wird. Auch in diesem Fall kann die durch die Reflexionen bedingte Verschiebung des Arbeitspunktes gemessen werden. Es ist auch denkbar, daß der Arbeitspunkt mit Hilfe einer regelbaren Vorspannungsquelle auf den Sollwert eingeregelt wird. In diesem Fall läßt sich die Verschiebung des Arbeitspunktes auch indirekt anhand der Reaktion des Regelkreises auf diese Verschiebung messen.

Wenn die gemessene Verschiebung des Arbeitspunktes oberhalb eines bestimmten Schwellenwertes liegt, so wird daran eine Funktionsbeeinträchtigung oder Erblindung des Radarsensors erkannt. Diese Erkennung kann dann je nach Anwendungsfall und Ausführungsform eine oder mehrere verschiedene Systemreaktionen auslösen. Beispielsweise kann bei erkannter Erblindung eine Selbstabschaltung des Fahrerassistenzsystems veranlaßt werden, verbunden mit einem akustischen oder sonstigen Wamhinweis an den Fahrer. Wenn die Verschiebung des Arbeitspunktes darauf hindeutet, daß der Radarsensor zwar noch funktionsfähig ist, aber in seiner Genauigkeit oder Verläßlichkeit eingeschränkt ist, so kann der Fahrer über einen entsprechenden Hinweis auf einem Display auf diesen Zustand aufmerksam und/oder dazu aufgefordert werden, das Radom bzw. die Linse des Radarsensors zu reinigen.

Kurze Beschreibung der Zeichnungen

Ein Ausführungsbeispiel der Erfindung ist in den Zeichnungen dargestellt und in der nachfolgenden Beschreibung näher erläutert.

Es zeigen:
- Figur 1: eine Prinzipskizze eines erfindungsgemäßen Radarsensors; und
- Figur 2: ein vereinfachtes Schaltbild wesentlicher Teile des Radarsen- sors.

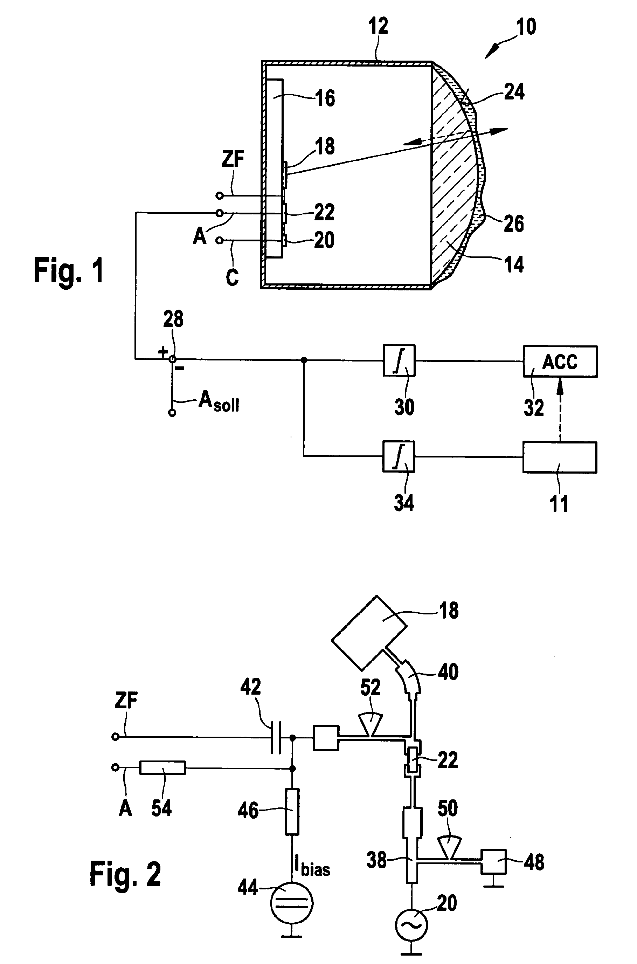

Figur 1 zeigt schematisch einen Radarsensor 10, der beispielsweise an der Frontpartie eines Kraftfahrzeugs montiert sein kann und als Sensorkomponente eines Fahrerassistenzsystems, etwa eines ACC-Systems 11, dazu dient, die Abstände und Relativgeschwindigkeiten von vorausfahrenden Fahrzeugen zu messen. Dieser Radarsensor weist ein Gehäuse 12 auf, das am vorderen Ende durch eine für Radarstrahlung durchlässige und brechende Linse 14 abgeschlossen ist. An der der Linse 14 gegenüberliegenden Wand des Gehäuses 12 ist eine Platine 16 montiert, auf der die Hochfrequenzkomponenten des Radarsensors angeordnet sind, insbesondere eine Antenne 18, die zum Senden des Radarsignals sowie zum Empfang eines etwaigen Radarechos dient (monostatisches Antennenkonzept), ein lokaler Oszillator 20, der durch ein Signal C von einer nicht gezeigten Steuereinheit angesteuert wird und der Antenne 18 das zu sendende Radarsignal zuführt, sowie ein Mischer 22, der das vom Oszillator 20 erzeugte und der Antenne 18 zugeführte Signal mit einem von der Antenne 18 empfangenen Signal (Radarecho) mischt (Homodynmischer). Ein als Mischprodukt erhaltenes Zwischenfrequenzsignal ZF wird von der Platine 16 abgeleitet und einer nicht gezeigten Auswerteeinheit zugeführt, die als solche bekannt ist und hier nicht näher beschrieben wird.

Die von der Antenne 18 gesendete Radarstrahlung wird durch die Linse 14 hindurch abgestrahlt und durch die Linse gebündelt. Ebenso wird durch die Linse ein empfangenes Radarecho auf die Antenne 18 fokussiert.

Bei Schneefall oder Regen kann die äußere, der Witterung ausgesetzte Oberfläche 24 der Linse 14 mit einer dielektrischen Schicht 26 bedeckt sein, beispielsweise einer Schicht aus Schneematsch oder einem Wasserfilm. Bei einer typischen Radarfrequenz von beispielsweise 76,5 GHz werden ab einer Wasserschichtdicke von ca. 0,23 mm etwa 50% der gesendeten Strahlung durch diese Schicht reflektiert, und von der verbleibenden Restleistung werden ca. 63% durch Absorption gedämpft. Dadurch kann es zu einer Funktionsbeeinträchtigung oder gar zu einer völligen Erblindung des Radarsensors kommen.

Die von der Antenne 18 durch die Linse 14 hindurch abgestrahlte Radarstrahlung wird in Figur 1 durch einen durchgehenden Pfeil symbolisiert. Ein Teil dieser Radarstrahlung wird an der dielektrischen Schicht 26 reflektiert, wie in Figur 1 durch einen gestrichelten Pfeil angedeutet wird. Diese reflektierte Strahlung, die mit der gesendeten Strahlung frequenzgleich ist, wird wieder von der Antenne 18 empfangen und gelangt so in den Mischer 22, der beispielsweise durch eine Diode gebildet wird. Durch die auf diese Weise in die Mischerdiode zurückgekoppelte Leistung wird die Symmetrie des Diodenstroms verletzt, und daraus resultiert eine Verschiebung des Arbeitspunktes der Mischerdiode.

Der Arbeitspunkt A, d. h., der diesen Arbeitspunkt definierende permanente Spannungsabfall an der Mischerdiode, wird von der Platine 16 abgegriffen und einem Subtraktionsglied 28 zugeführt. An einem anderen Eingang dieses Subtraktionsgliedes liegt ein Sollwert Aₛₒₗₗ an, der den normalen, nicht durch Reflexionen beeinflußten Arbeitspunkt des Mischers 22 entspricht. Die Differenz A - Aₛₒₗₗ wird einem Schwellenwertvergleicher 30 zugeführt, und wenn die Differenz einen vorbestimmten Schwellenwert überschreitet, liefert der Schwellenwertvergleicher 30 ein Signal an eine Mensch/Maschine-Schnittstelle 32, die dann beispielsweise den Fahrer der Fahrzeugs darüber informiert, daß die Funktionsfähigkeit des Radarsensors eingeschränkt ist.
Außerdem wird die vom Subtraktionsglied 28 gebildete Differenz einem zweiten Schwellenwertvergleicher 34 zugeführt, an dem ein höherer Schwellenwert eingestellt ist. Wenn auch dieser höhere Schwellenwert überschritten wird, so liefert der zweite Schwellenwertvergleicher 34 ein Signal an das ACC-System 11, das letztlich die Signale des Radarsensors 10 auswertet. Dieses Signal bewirkt dann eine Selbstabschaltung des ACC-Systems, vorzugsweise verbunden mit einem Wamhinweis an den Fahrer, der über die Mensch/Maschinen-Schnittstelle 32 ausgegeben wird.

In Figur 2 ist ein möglicher Schaltungsaufbau gezeigt, der die Messung des Arbeitspunktes A erlaubt. Die auf der Platine 16 angeordneten Komponenten des Radarsensors sind in Figur 2 zum Teil stark schematisiert dargestellt.

Der lokale Oszillator 20 erzeugt das zu sendende Signal. Dieses Signal wird über eine erste Anpaßschaltung 38 zur Impedanzanpassung, den Mischer 22 und eine zweite Anpaßschaltung 40 an die Antenne 18 weitergeleitet und von dieser abgestrahlt. Das von der Antenne empfangene Signal gelangt über die zweite Anpaßschaltung 40 in den durch eine nichtlineare Diode gebildeten Mischer 22 und wird dort aufgrund der Nichtlinearität der Diode mit dem gesendeten Signal gemischt, so daß an einem auf der Seite der Antenne 18 gelegenen Kontakt des Mischers 22 das Zwischenfrequenzsignal ZF abgegriffen und über einen Kondensator 42 ausgekoppelt werden kann.

Zum Vorspannen der Mischerdiode ist im gezeigten Beispiel eine Gleichspannungsquelle 44 vorgesehen, die über einen Vorwiderstand 46 mit dem Kontakt des Mischers 22 verbunden ist, an dem auch das Zwischenfrequenzsignal abgegriffen wird. Die Gleichspannungsquelle 44 erzeugt einen Strom I_{bias}, der über den Vorwiderstand 46 und durch den Mischer 22 zu einem an die Anpaßschaltung 38 angeschlossenen Massepunkt 48 fließt. Zwischen der Anpaßschaltung 38 und dem Massepunkt 48 ist eine erste Hochfrequenzbandsperre 50 eingefügt, die verhindert, daß das Hochfrequenzsignal zum Massepunkt 48 abfließt. Eine weitere Hochfrequenzbandsperre 52 ist zwischen dem Mischer 22 einerseits und dem Kondensator 42 und dem Vorwiderstand 46 andererseits eingefügt. Der Kondensator 42 verhindert ein Abfließen des Stroms I_{bias} über den Zwischenfrequenzausgang.

Dieser Strom I_{bias} ist auch von dem durch die Reflexionen beeinflussten Spannungsabfall an der Mischerdiode und damit vom Arbeitspunkt des Mischers abhängig. Somit bildet der Spannungsabfall am Vorwiderstand 46 zugleich ein Maß für den Arbeitspunkt A des Mischers 22. Dieser Arbeitspunkt wird hier über einen Meß-Vorwiderstand 54 abgegriffen und einer nicht gezeigten Spannungsmeßschaltung zugeführt, deren Ausgang dann mit dem Subtraktionsglied 28 in Figur 1 verbunden ist.

Das hier beschriebene Verfahren zur Erkennung von Verlustbehafteten und reflektierenden Schichten auf der Oberfläche 24 der Linse ist bei unterschiedlichen Radarsystemen anwendbar, z. B. bei einem FMCW-Radar oder auch einem FSK-Radar (Frequency Shift Keying). Sofern die gesendete und die empfangene Radarstrahlung dieselbe Oberfläche der Linse oder eines Radoms durchstrahlt, kann beispielsweise auch ein bistatisches Antennenkonzept eingesetzt werden, bei dem zum Senden und zum Empfang zwei getrennt, nebeneinander liegende Antennenelemente vorgesehen sind. Der Mischer ist dann mit der Empfangsantenne verbunden und erhält außerdem als Referenzsignal das Signal des mit der Sendeantenne verbundenen lokalen Oszillators oder eines separaten Oszillators mit gleicher Frequenz.

## Patentansprüche

1. Verfahren zur Feststellung von Verlusten an einer von der gesendeten und empfangenen Radarstrahlung durchstrahlten Oberfläche (24) eines Radarsensors (10), der einen Mischer (22) zum Mischen des empfangenen Radarsignals mit einem Referenzsignal aufweist, **dadurch gekennzeichnet, daß** der Arbeitspunkt (A) des Mischers gemessen wird, indem zusätzlich zu dem Mischprodukt (ZF) ein den Arbeitspunkt definierender permanenter Spannungsabfall direkt am Mischer (22) abgegriffen wird, und daß das Vorhandensein von Verlustquellen an einer Verschiebung dieses Arbeitspunktes erkannt wird.

2. Radarsensor mit einem Mischer (22) zum Mischen eines empfangenen Signals mit einem gesendeten Signal und zur Ausgabe eines Mischprodukts (ZF), **gekennzeichnet durch** eine Einrichtung (46, 54, 28, 30) zur Messung des Arbeitspunktes (A) des Mischers und zur Ausgabe eines Fehlersignals, wenn die Verschiebung des Arbeitspunktes gegenüber einem Normalwert (Aₛₒₗₗ) einen bestimmten Schwellenwert überschreitet, wobei, die genannte Einrichtung (46, 54, 28, 30) einen den Arbeitspunkt definierenden permanenten Spannungsabfall direkt am Mischer (22) abgreift.

3. Radarsensor nach Anspruch 2, **dadurch gekennzeichnet, daß** er für den Einbau in ein Kraftfahrzeug und den Einsatz als Ortungsgerät im Rahmen eines Fahrerassistenzsystems ausgebildet ist.

4. Radarsensor nach Anspruch 2 oder 3, **dadurch gekennzeichnet, daß** der Mischer (22) ein Homodynmischer ist.

5. Radarsensor nach einem der Ansprüche 2 bis 4, **dadurch gekennzeichnet, daß** er eine kombinierte Sende- und Empfangsantenne (18) aufweist.

6. Fahrerassistenzsystem für Kraftfahrzeuge, **gekennzeichnet durch** einen Radarsensor (10) nach einem der Ansprüche 3 bis 5.

7. Fahrerassistenzsystem nach Anspruch 6, **gekennzeichnet durch** eine Mensch/Maschine-Schnittstelle (32) zur Ausgabe eines Warnsignals an den Fahrer, wenn der Radarsensor (10) meldet, daß die Verschiebung des Arbeitspunktes einen bestimmen Schwellenwert überschreitet.

8. Fahrerassistenzsystem nach Anspruch 6 oder 7, **gekennzeichnet durch** eine Funktion, die eine Selbstabschaltung des Fahrerassistenzsystems (36) bewirkt, wenn der Radarsensor (10) meldet, daß die Verschiebung des Arbeitspunktes einen bestimmten Schwellenwert überschreitet.

## Claims

1. Method for determining losses on a surface (24) of a radar sensor (10) through which the transmitted and received radar radiation passes and which has a mixer (22) for mixing the received radar signal with a reference signal, **characterized in that** the working point (A) of the mixer is measured **in that**, in addition to the mixed product (ZF), a continuous voltage drop which defines the working point is tapped directly at the mixer (22), and **in that** the presence of loss sources is detected at a shifting of this working point.

2. Radar sensor having a mixer (22) for mixing a received signal with a transmitted signal and for outputting a mixed product (ZF), **characterized by** a device (46, 54, 28, 30) for measuring the working point (A) of the mixer and for outputting a fault signal if the shifting of the working point with respect to a normal value (Aₛₒₗₗ) exceeds a specific threshold value, wherein the specified device (46, 54, 28, 30) taps a continuous voltage drop, which defines the working point, directly at the mixer (22).

3. Radar sensor according to Claim 2, **characterized in that** said radar sensor is designed for installation in a motor vehicle and for use as a locating device within the scope of a driver assistance system.

4. Radar sensor according to Claim 2 or 3, **characterized in that** the mixer (22) is a homodyne mixer.

5. Radar sensor according to one of Claims 2 to 4, **characterized in that** said radar sensor has a combined transmission and reception antenna (18).

6. Driver assistance system for motor vehicles **characterized by** a radar sensor (10) according to one of Claims 3 to 5.

7. Driver assistance system according to Claim 6, **characterized by** a man/machine interface (32) for outputting a warning signal to the driver if the radar sensor (10) signals that the shifting of the working point exceeds a specific threshold value.

8. Driver assistance system according to Claim 6 or 7, **characterized by** a function which brings about an automatic shutdown of the driver assistance system (36) if the radar sensor (10) signals that the shifting of the working point exceeds a specific threshold value.

## Revendications

1. Procédé de détection de pertes sur une surface (24) traversée par le rayonnement radar émis et reçu par un détecteur radar (10) qui présente un mélangeur (22) qui mélange le signal radar reçu à un signal de référence,
**caractérisé en ce que**
le point de travail (A) du mélangeur est mesuré en saisissant directement sur le mélangeur (22), en plus du produit (ZF) du mélange, une chute de tension permanente qui définit le point de travail et
**en ce que** la présence de sources de perte est détectée par déplacement de ce point de travail.

2. Détecteur radar doté d'un mélangeur (22) qui mélange un signal reçu à un signal émis et qui délivre un produit (ZF) de mélange, **caractérisé par** un dispositif (46, 54, 28, 30) de mesure du point de travail (A) du mélangeur qui délivre un signal d'erreur lorsque le décalage du point de travail par rapport à une valeur normale (Aₛₒₗₗ) dépasse une valeur de seuil définie, ledit dispositif (46, 54, 28, 30) saisissant directement sur le mélangeur (22) une chute de tension permanente qui définit le point de travail.

3. Détecteur radar selon la revendication 2, **caractérisé en ce qu'**il est configuré pour être monté dans un véhicule automobile et pour être utilisé comme appareil de localisation dans un système d'assistance au conducteur.

4. Détecteur radar selon la revendication 2 ou 3, **caractérisé en ce que** le mélangeur (22) est un mélangeur homodyne.

5. Détecteur radar selon l'une des revendications 2 à 4, **caractérisé en ce qu'**il présente une antenne combinée d'émission et de réception (18).

6. Système d'assistance au conducteur de véhicules automobiles, **caractérisé par** un détecteur radar (10) selon l'une des revendications 3 à 5.

7. Système d'assistance au conducteur de véhicules automobiles selon la revendication 6, **caractérisé par** une interface homme-machine (32) qui délivre au conducteur un signal d'avertissement lorsque le détecteur radar (10) signale que le décalage du point de travail dépasse une valeur de seuil définie.

8. Système d'assistance au conducteur de véhicules automobiles selon la revendication 6 ou 7, **caractérisé par** une fonction qui a pour effet un auto-débranchement du système (36) d'assistance au conducteur lorsque le détecteur radar (10) signale que le décalage du point de travail dépasse une valeur de seuil définie.
